(19) Europäisches Patentamt / European Patent Office / Office européen des brevets

(11) **EP 2 749 787 A2**

(12) **EUROPEAN PATENT APPLICATION**

(43) Date of publication:
02.07.2014 Bulletin 2014/27

(51) Int Cl.:
*F16F 9/26* (2006.01)

(21) Application number: 13199725.6

(22) Date of filing: 27.12.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.12.2012 JP 2012284380

(71) Applicant: **Yamaha Motor Hydraulic System
Kabushiki Kaisha**
**Shuchi-gun, Shizuoka 437-0223 (JP)**

(72) Inventor: **Ito, Keisuke**
**Shizuoka, 437-0223 (JP)**

(74) Representative: **Burger, Markus et al**
**Schoppe Zimmermann**
**Stöckeler Zinkler & Partner**
**Postfach 246**
**82043 Pullach (DE)**

(54) **Shock absorber, front fork, and saddle-ride type vehicle**

(57)     A shock absorber (10) includes: a first cylinder part (21); a second cylinder part (22) provided at one end portion of the first cylinder part (21), the second cylinder part (22) extending in an axial direction of the first cylinder part (21) from the one end portion of the first cylinder part (21), the second cylinder part (22) being in communication with the first cylinder part (21); a first piston part (41) arranged in an internal space of the first cylinder part (21), the first piston part (41) being movable in the axial direction of the first cylinder part (21), the first piston part (41) partitioning the internal space of the first cylinder part (21) into two chambers (51a, 51b); a second piston part (42) arranged in an internal space of the second cylinder part (22), the second piston part (42) being movable in an axial direction of the second cylinder part (22), the second piston part (42) partitioning the internal space of the second cylinder part (22) into two chambers (52a, 52b), the two chambers including a first chamber (52a) and a second chamber (52b), the first chamber (52a) being in communication with the first cylinder part (21), the second chamber (52b) not being in communication with the first cylinder part (21); a first rod part (31) connected to the first piston part (41), the first rod part (31) extending in the axial direction of the first cylinder part (21) from the first piston part (41) through the other end portion of the first cylinder part (21) to the outside of the first cylinder part (21); a second rod part (32) provided between the first piston part (41) and the second piston part (42), the second rod part (32) extending in the axial direction of the second cylinder part (22) from the first piston part (41) through the one end portion of the first cylinder part (21) to the inside of the second cylinder part (22), the second rod part (32) being connected to the second piston part (42). The second rod (32) part has a stiffness lower than the stiffness of the first rod part (31). The shock absorber (10) is configured such that, when the first piston part (41) moves toward the one end portion side of the first cylinder part (21), the first rod part (31) moves into the first cylinder part (21), so that a volume of the internal space of the first cylinder part (21) decreases, while the second piston part (42) moves along with the first piston part (41), so that a volume of the first chamber (52a) of the second cylinder part (22) increases.

FIG.1

**Description**

[TECHNICAL FIELD]

The present invention relates to a shock absorber, a front fork, and a saddle-ride type vehicle.

[BACKGROUND ART]

Patent Document 1 discloses a shock absorber including a double rod cylinder. The shock absorber disclosed in the Patent Document 1 includes a cylinder, a piston, and a pair of piston rods. The piston, which is provided in the cylinder, partitions the interior of the cylinder into two oil chambers. A damping valve for a working fluid between the two oil chambers is provided to the piston. Each of the piston rods is provided to each of the surfaces of the piston. A first piston rod extends from the piston in the axial direction of the cylinder, and protrudes out of the cylinder through an opening provided at one end portion of the cylinder. A second piston rod extends in the direction opposite to the direction of extension of the first piston rod. Similarly to the first piston rod, the second piston rod protrudes out of the cylinder through an opening provided at the other end portion of the cylinder. A sealing member and a bearing member are provided between each of the piston rods and each of the openings of the cylinder. Each of the piston rods is slidable on the opening edge (the sealing member and the bearing member) of the cylinder. Accordingly, each of the piston rods is movable in the axial direction of the cylinder while the interior of the cylinder is kept sealed.

In the shock absorber of the Patent Document 1, as the first piston rod moves into the cylinder, the second piston rod moves out of the cylinder. In this configuration, it is not necessary to compensate for a volume change caused by forward or backward movement of the piston rod. Therefore, the shock absorber of the Patent Document 1 does not need a reservoir, which would be necessary in a shock absorber including a single rod cylinder. Moreover, in the shock absorber of the Patent Document 1, a change in the amount of hydraulic oil contained in the cylinder is small. This suppresses a deterioration in the responsiveness in generating a damping force, which may be caused when the amount of oil flowing out of the cylinder exceeds the amount of oil flowing into the cylinder while the piston is moving at a high speed. As a result, stable generation of the damping force is expected.

[PRIOR ART DOCUMENTS]

[PATENT DOCUMENTS]

[Patent Document 1] Japanese Patent Application Laid-Open No. 2004-293660

[SUMMARY OF THE INVENTION]

[PROBLEMS TO BE SOLVED BY THE INVENTION]

In the shock absorber of the Patent Document 1, a portion of the piston rod that protrudes from the head side of the cylinder is coupled to either one of a vehicle body side and a wheel side, while a portion of the cylinder located at the cap side is coupled to the other of the vehicle body side and the wheel side. Thus, the piston rod protruding from the head side of the cylinder serves as a support member between the vehicle body and the wheel. Therefore, the strength of the piston rod protruding from the head side of the cylinder needs to be high.

In the shock absorber of the Patent Document 1, a reduction in the volume of the cylinder, which is caused by movement of the first piston rod into the cylinder, is compensated for by movement of the second piston rod out of the cylinder. Therefore, the second piston rod should be configured to move out of the cylinder to thereby compensate for a reduction in the volume of the cylinder caused by movement of the first piston rod into the cylinder. For this purpose, for example, the outer diameter of the second piston rod is substantially equal to the outer diameter of the first piston rod.

This is why both of the piston rods normally have a high stiffness in the shock absorber as disclosed in the Patent Document 1.

In a situation where a force causing the shock absorber to be bent is applied to the shock absorber (for example, in a situation where the shock absorber is used as a front fork), it is inevitable that a high frictional force is caused during expansion or contraction of the shock absorber, because the piston rods have a relatively high stiffness.

In such a case, a rider may feel a sense of uneven or rough switching between an expansion stroke and a contraction stroke, because of the frictional force acting on the piston and the piston rod. In order to prevent the rider from experiencing such a sense of feeling, it is preferable that a load change in the course of displacement of the piston is small. That is, it is preferable that the operability (smoothness during a load change) of the shock absorber is improved.

Since the shock absorber of the Patent Document 1 adopts a double rod cylinder, the stiffness of the piston rod must be high, as described above. Therefore, it is quite difficult to improve the operability of the shock absorber while maintaining the advantageous effects of the double rod cylinder having an excellent responsiveness.

The present invention is accomplished in view of the problems described above. An object of the present invention is to provide a shock absorber, a front fork, and a saddle-ride type vehicle that enables improvement in the operability while ensuring the responsiveness in generating a damping force.

[MEANS FOR SOLVING THE PROBLEMS]

To solve the problems described above, the present invention adopts the following configurations.

(1) A shock absorber including:

a first cylinder part;
a second cylinder part provided at one end portion of the first cylinder part, the second cylinder part extending in an axial direction of the first cylinder part from the one end portion of the first cylinder part, the second cylinder part being in communication with the first cylinder part;
a first piston part arranged in an internal space of the first cylinder part, the first piston part being movable in the axial direction of the first cylinder part, the first piston part partitioning the internal space of the first cylinder part into two chambers;
a second piston part arranged in an internal space of the second cylinder part, the second piston part being movable in an axial direction of the second cylinder part, the second piston part partitioning the internal space of the second cylinder part into two chambers, the two chambers including a first chamber and a second chamber, the first chamber being in communication with the first cylinder part, the second chamber not being in communication with the first cylinder part;
a first rod part connected to the first piston part, the first rod part extending in the axial direction of the first cylinder part from the first piston part through the other end portion of the first cylinder part to the outside of the first cylinder part; and
a second rod part provided between the first piston part and the second piston part, the second rod part extending in the axial direction of the second cylinder part from the first piston part through the one end portion of the first cylinder part to the inside of the second cylinder part, the second rod part being connected to the second piston part,
the second rod part having a stiffness lower than the stiffness of the first rod part,
the shock absorber being configured such that, when the first piston part moves toward the one end portion side of the first cylinder part, the first rod part moves into the first cylinder part, so that a volume of the internal space of the first cylinder part decreases, while the second piston part moves along with the first piston part, so that a volume of the first chamber of the second cylinder part increases.

In a configuration of (1), when the first piston part moves toward the one end portion side of the first cylinder part, the first rod part moves into the first cylinder part, so that the volume of the internal space of the first cylinder part decreases, while the second piston part moves along with the first piston part, so that the volume of the first chamber of the second cylinder part, which is a chamber in communication with the first cylinder part between the two chambers of the second cylinder part, increases. Thus, in the shock absorber of (1), a volume decrease in the first cylinder part, which is caused by movement of the first rod part into the first cylinder part, is compensated for by a volume increase in the first chamber of the second cylinder part. This reduces the amount of a working fluid flowing between the inside and the outside of the cylindrical body. Accordingly, the responsiveness of generation of a damping force is ensured.

In the shock absorber of the Patent Document 1, as described above, a volume decrease in the cylinder, which is caused by movement of the first piston rod into the cylinder, is compensated for by movement of the second piston rod out of the cylinder. For this purpose, the second piston rod has a high stiffness. In the configuration of (1), in contrast, a volume compensation is implemented by increasing the volume of the first chamber of the second cylinder part. It is not necessary that the second rod part has a large volume. Thus, in the shock absorber of (1), the second rod part has a stiffness smaller than the stiffness of the first rod part.

Therefore, even in a situation where a force that causes the shock absorber to be bent is applied to the shock absorber, an increase in a frictional force caused during expansion and contraction of the shock absorber is suppressed. As a result, the operability of the shock absorber can be improved.

Accordingly, the shock absorber of (1) is able to improve the operability while ensuring the responsiveness in generating the damping force.

(2) The shock absorber according to (1), wherein

the second piston part is slidable on an inner surface of the second cylinder part,
the second rod part is not slidable on the inner surface of the second cylinder part.

In the conventional shock absorber including the double rod cylinder (for example, the shock absorber disclosed in the Patent Document 1), as described above, an outer circumferential surface of the second piston rod is slidable on the opening edge (for example, the sealing member and the bearing member provided in the opening) at an end portion of the cylinder. A portion of the outer circumferential surface of the second piston rod that is sliding on the opening edge at the end portion of the cylinder changes along with movement of the second piston rod. Therefore, the conventional shock absorber needs to be configured such that a relatively large portion of the outer circumferential surface of the second piston rod is slidable on the opening edge at the end portion of the cylinder. This requires that the outer diameter of the second piston rod be kept constant with respect to the axial direction. Additionally, it is necessary that an external surface of the second piston rod has a relatively high hardness, in order that the external surface of the second piston rod can endure the sliding on the opening edge at the end portion of the cylinder.

In a configuration of (2), a portion that is slidable on the inner surface of the second cylinder part is the second piston part, and not the second rod part. In other words, while in the conventional shock absorber, a portion that is sliding on the cylinder of the second piston rod changes along with movement of the second piston rod; in the configuration of (2), a portion that is slidable on the second cylinder part is always the outer circumferential surface of the second piston part, and does not change along with movement of the second rod part. Accordingly, in the configuration of (2), it is not always necessary that the outer diameter of the second rod part is kept constant with respect to the axial direction. It is not necessary that the external surface of the second rod part has a high hardness, either. Thus, the second rod part may be soft, and for example, may be a rod-shaped body made of a resin.

The configuration of (2) can reduce a contact load caused in a sliding portion at a time when the shock absorber is bent, and can reduce a frictional force. The stiffness of the second rod part can be reduced easily. Furthermore, the second rod part is not slidable on the inner surface of the second cylinder part. Therefore, at the side closer to the first cylinder part relative to the second piston part, a space is formed between the entire outer circumferential surface of the second rod part and the entire inner circumferential surface of the second cylinder part. This space is ensured as a space within the first chamber of the second cylinder part. Accordingly, a volume change caused by forward or backward movement of the first rod part can be compensated for efficiently. As a result, the operability and the responsiveness in generating the damping force can be sufficiently ensured at a high level.

(3) The shock absorber according to (1) or (2), wherein
the second rod part has an outer diameter smaller than an outer diameter of the second piston part.

In a configuration of (3), at the side closer to the first cylinder part relative to the second piston part, a space is formed between the outer circumferential surface of the second rod part and the inner circumferential surface of the second cylinder part, and this space is ensured as a space within the first chamber of the second cylinder part. Accordingly, a volume change caused by forward or backward movement of the first rod part can be compensated for efficiently. As a result, the responsiveness in generating the damping force can be further improved.

(4) The shock absorber according to any one of (1) to (3), wherein
the second rod part has an outer diameter smaller than an outer diameter of the first rod part.

In a configuration of (4), it is easy to make the stiffness of the second rod part lower than the stiffness of the first rod part. The space between the second rod part and the second cylinder part is used as the first chamber of the second cylinder part (used as a chamber to compensate for a volume change caused by forward or backward movement of the first rod part). In the shock absorber of (4), the outer diameter of the second rod part is smaller than the outer diameter of the first rod part. Therefore, it is easy to ensure a large volume as the volume of the chamber to compensate for the volume change caused by forward or backward movement of the first rod part.

(5) The shock absorber according to any one of (1) to (4), wherein
the first chamber of the second cylinder part is defined by a boundary surface between the internal space of the first cylinder part and the internal space of the second cylinder part, a surface of the second piston part facing the second rod part side, an outer circumferential surface of the second rod part, and an inner circumferential surface of the second cylinder part.

In a configuration of (5), a volume is ensured for the first chamber of the second cylinder part. Accordingly, a volume change caused by forward or backward movement of the first rod part can be compensated for efficiently. As a result, the responsiveness in generating the damping force can be further improved.

(6) A front fork including the shock absorber according to any one of (1) to (5).

A configuration of (6) is able to improve the operability while ensuring the responsiveness in generating the damping force.

(7) A saddle-ride type vehicle including the front fork according to (6).

A configuration of (7) is able to improve the operability while ensuring the responsiveness in generating the damping force. As a result, comfort in riding and running performance can be improved.

[EFFECTS OF THE INVENTION]

A shock absorber of the present invention improves the operability while ensuring the responsiveness in generating a damping force.

These and other objects, features, aspects and advantages of the present invention will become more apparent from the following detailed description, which, taken in conjunction with the accompanying drawings, discloses some embodiments of the present invention.

[BRIEF DESCRIPTION OF THE DRAWINGS]

[FIG. 1] A cross-sectional view schematically showing a shock absorber according to a first embodiment.

[FIG. 2] (a) is a cross-sectional view schematically showing a state when the shock absorber shown in FIG. 1 is expanded; and (b) is a cross-sectional view schematically showing a state when the shock absorber shown in FIG. 1 is contracted.

[FIG. 3] A cross-sectional view of a shock absorber according to a second embodiment.

[FIG. 4] (a) is a cross-sectional view schematically showing a state when the shock absorber shown in FIG. 3 is expanded; and (b) is a cross-sectional view schematically showing a state when the shock absorber shown in FIG. 3 is contracted.

[FIG. 5] A diagram showing the relationship between a displacement and a load of the shock absorber.

[FIG. 6] A side view schematically showing a motorcycle including the shock absorber shown in FIG. 3.

[FIG. 7] A side view schematically showing, on an enlarged scale, a part of the motorcycle shown in FIG. 6.

[EMBODIMENTS FOR CARRYING OUT THE INVENTION]

The present inventor has conducted intensive studies in view of the problems described above, to obtain the following findings.

The conventional shock absorber including the double rod cylinder is configured such that, as the first piston rod moves into the cylinder, the second piston rod moves out of the cylinder. This eliminates the need to compensate for a volume change caused by forward or backward movement of the piston rod. Thus, the responsiveness in generating a damping force is ensured. In other words, the volume of the second piston rod moving out of or into the cylinder is used to compensate for a volume change caused by forward or backward movement of the piston rods. Therefore, in the shock absorber including the double rod cylinder, ensuring a sufficient volume of the second piston rod is conventionally required as a matter of course. As a result, the stiffness of the second piston rod is increased, which deteriorates the operability of the shock absorber.

The present inventor has changed the way of thinking and deviated from the conventional concept, and has reached an idea of providing a first cylinder part and a second cylinder part that is in communication with the first cylinder part and adopting a configuration in which the volume of a first chamber of the second cylinder part, which is a chamber in communication with an internal space of the first cylinder part between two chambers of the second cylinder part, is increased as a first rod part moves into the first cylinder part. Since a volume change in the chamber of the second cylinder part is used for volume compensation, the need to use the volume of the piston rod itself for volume compensation is eliminated while the responsiveness is ensured. This allows the stiffness of a second rod part to be lower than the stiffness of the first rod part. This can improve the operability, and both the operability and the responsiveness are achieved.

The present invention is an invention accomplished based on the findings described above.

Hereunder, embodiments will be described with reference to the drawings.

<First Embodiment>

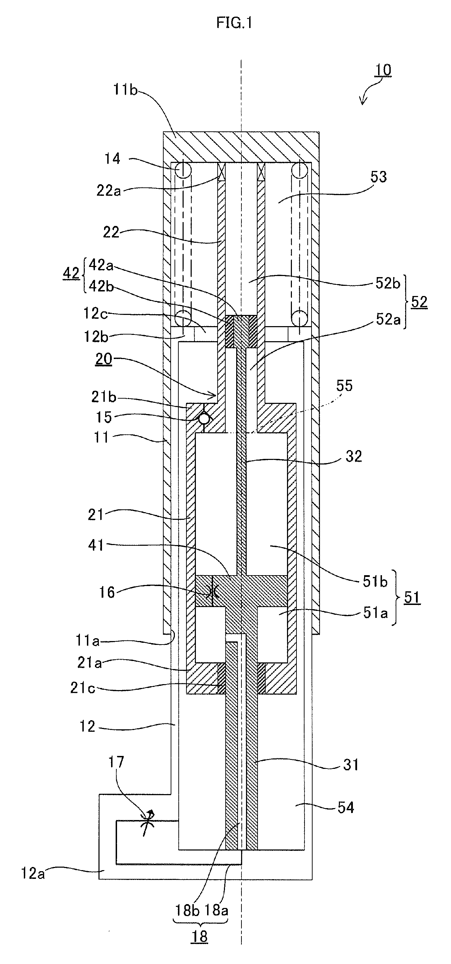

FIG. 1 is a cross-sectional view schematically showing a shock absorber according to a first embodiment.

In the following, the side at which a first rod part 31 protrudes from a cylindrical member 20 (the lower side in FIG. 1) will be called a head side, and the side (the upper side in FIG. 1) opposite to the head side will be called a cap side.

In the following, a description will be given by using an axial direction of the cylindrical member 20 as a reference. The axial direction of the cylindrical member 20 is parallel to an axial direction of a first tube 11, an axial direction of a second tube 12, and an axial direction of the first rod part 31 and the second rod part 32.

A shock absorber 10 according to the first embodiment includes a first tube 11 (outer tube), a second tube 12 (inner tube), and the cylindrical member 20. In the shock absorber 10, the first tube 11 is a vehicle-body-side tube, and the second tube 12 is a wheel-side tube. The first tube 11 is closer to the upper side than the second tube 12.

The first tube 11 is a cylindrical body. A first end portion 11 a of the first tube 11 at the head side is an open end portion. An opening is provided in the first end portion 11a. The inner diameter of the opening is equal to the inner diameter of the first tube 11. A second end portion 11b of the first tube 11 at the cap side is a closed end portion.

The second tube 12 is a cylindrical body. A first end portion 12a of the second tube 12 at the head side is a closed end portion. A second end portion 12b of the second tube 12 at the cap side includes a through hole 12c. The through hole 12c extends through the second end portion 12b in the axial direction of the cylindrical member 20. The outer diameter of the through hole 12c is smaller than the outer diameter of the second tube 12. The outer diameter of the through hole 12c is smaller than the inner diameter of the second tube 12.

The second end portion 12b of the second tube 12 is received in the first end portion 11 a (open end portion) of the first tube 11. The second tube 12 is configured such that an outer circumferential surface of the second tube 12 is slidable on an inner circumferential surface of the first tube 11. Accordingly, the second tube 12 is movable to and fro relative to the first tube 11 in the axial direction of the cylindrical member 20.

An inside surface of the second end portion 11b of the first tube 11 is opposed to an outside surface of the second end portion 12b of the second tube 12. A biasing element 14 (coil spring) is provided between the inside surface of the second end portion 11b and the outside surface of the second end portion 12b. The biasing element 14 biases the second tube 12 toward the head side in the axial direction of the cylindrical member 20. No particular limitation is put on the biasing element 14. A conventionally known biasing element is adoptable.

In a state where the second tube 12 is received in the first tube 11, a third space 53 within the first tube 11 is in communication with a fourth space 54 within the second tube 12. More specifically, the third space 53 is in communication with the fourth space 54 via the through hole 12c. A working fluid (not shown) is encapsulated in the second tube 12 and the first tube 11. A fluid surface of the working fluid exists in the third space 53. The fluid surface serves as the boundary that defines an air chamber (not shown) formed above the fluid surface.

The cylindrical member 20 includes a first cylinder part 21 and a second cylinder part 22.

The first cylinder part 21 is a cylindrical body. The first cylinder part 21 includes a first space 51 (internal space) formed therein. The first cylinder part 21 is installed within the second tube 12. The outer diameter of the first cylinder part 21 is smaller than the inner diameter of the second tube 12. There is a gap between an outer circumferential surface of the first cylinder part 21 and an inner circumferential surface of the second tube 12. The inner diameter of the first cylinder part 21 is constant with respect to the axial direction of the cylindrical member 20.

A first end portion 21 a of the first cylinder part 21 at the head side includes a through hole that extends through the first end portion 21 a in the axial direction of the cylindrical member 20. An annular sealing member 21c (slidable member) is provided in the through hole. A first rod part 31 which will be described below passes through the sealing member 21 c.

A second cylinder part 22 is provided at a second end portion 21b of the first cylinder part 21 at the cap side. The second cylinder part 22 is a cylindrical body. The second cylinder part 22 includes a second space 52 (internal space) formed therein. The outer diameter of the second cylinder part 22 is smaller than the outer diameter of the first cylinder part 21. The inner diameter of the second cylinder part 22 is smaller than the inner diameter of the first cylinder part 21. The inner diameter of the second cylinder part 22 is constant with respect to the axial direction of the cylindrical member 20. Opposite ends of the second cylinder part 22 are open end portions.

The second cylinder part 22 extends from the second end portion 21b of the first cylinder part 21 in the axial direction of the first cylinder part 21. The second space 52 of the second cylinder part 22 is in communication with the first space 51 of the first cylinder part 21. The outer diameter of the second space 52 is smaller than the outer diameter of the first space 51. The outer diameter of an internal space changes at a portion where the first space 51 and the second space 52 communicate with each other. This portion at which a change in the outer diameter occurs defines a boundary surface 55 between the first space 51 and the second space 52.

An end portion of the second cylinder part 22 at the cap side is fixed to the second end portion 11b of the first tube 11. Thus, the cylindrical member 20 is fixed to the first tube 11. A portion of the second cylinder part 22 at the cap side includes, in a side wall thereof, a communication hole 22a extending through the second cylinder part 22 in a radial direction of the second cylinder part 22. The second space 52 of the second cylinder part 22 and the third space 53 of the first tube 11 are in communication with each other via the communication hole 22a.

The shock absorber 10 includes a first piston part 41, a second piston part 42, a first rod part 31, and a second rod part 32.

The first piston part 41 is provided in the first space 51 of the first cylinder part 21. The first piston part 41 is configured such that an outer circumferential surface of the first piston part 41 is slidable on an inner circumferential surface of the first cylinder part 21. That is, the first piston part 41 is slidable on an inner surface of the first cylinder part 21. Accordingly, the first piston part 41 is movable in the axial direction of the first cylinder part 21. The first piston part 41 partitions the first space 51 of the first cylinder part 21 into a first chamber 51a and a second chamber 51b. The first chamber 51a is located at the head side. The second chamber 51b is located at the cap side.

The second piston part 42 is provided in the second space 52 of the second cylinder part 22. The second piston part 42 includes a column-shaped solid portion 42a and an annular sealing member 42b (slidable member). The solid portion 42a extends in the axial direction of the cylindrical member 20. The sealing member 42b is arranged so as to cover an outer circumferential surface of the solid portion 42a. The second piston part 42 is configured such that an outer circumferential surface of the second piston part 42 (sealing member 42b) is slidable on an inner circumferential surface of the second cylinder part 22. That is, the second piston part 42 is slidable on an inner surface of the second cylinder part 22. Accordingly, the second piston part 42 is movable in the axial direction of the second cylinder part 22. The second piston part 42 partitions the second space 52 of the second cylinder part 22 into a first chamber 52a and a second chamber 52b. The first chamber 52a is located at the head side. The second chamber 52b is located at the cap side. The first chamber 52a of the second space 52 is in communication with the first cylinder part 21 (the first space 51). The first chamber 52a of the second space 52 is in communication with the second chamber 51b of the first space 51. The second chamber 52b of the second space 52 is not in communication with the first cylinder part 21 (the first space 51). The second chamber 52b of the second space 52 is not in communication with the second chamber 51b of the first space 51. A working fluid is loaded in the first space 51 and the first chamber 52a that is in communication with the first space 51.

The first rod part 31 is connected to the first piston part 41. An end portion of the first rod part 31 at the cap side is fixed to the first piston part 41. The first rod part 31 extends in the axial direction of the first cylinder part 21 from the first piston part 41 through the first end portion 21 a of the first cylinder part 21 to the outside of the first cylinder part 21. As described above, the sealing member 21c is provided at the first end portion 21 a of the first cylinder part 21. The first rod part 31 passes through the sealing member 21 c, and extends to the outside of the first cylinder part 21. An end portion of the first rod part 31 at the head side is fixed to the first end portion 12a of the second tube 12. An outer circumferential surface of the first rod part 31 is not in contact with the inner circumferential surface of the first cylinder part 21 except for the sealing member 21 c. Therefore, the first rod part 31 is not slidable on the inner surface of the first cylinder part 21 except for the sealing member 21 c.

The second rod part 32 is arranged between the first piston part 41 and the second piston part 42. The second rod part 32 extends in the axial direction of the second cylinder part 22 from the first piston part 41 through the second end portion 21b of the first cylinder part 21 to the inside of the second cylinder part 22. The second rod part 32 is connected to the second piston part 42. An end portion of the second rod part 32 at the head side is fixed to the first piston part 41. An end portion of the second rod part 32 at the cap side is fixed to the second piston part 42. An outer circumferential surface of the second rod part 32 is not in contact with the inner circumferential surface of the second cylinder part 22. Therefore, the second rod part 32 is not slidable on the inner surface of the second cylinder part 22. This reduces a contact load caused in a portion where sliding occurs, and reduces a frictional force.

The first piston part 41, the second piston part 42, the first rod part 31, and the second rod part 32 are configured to be integrally movable relative to the cylindrical member 20.

In the shock absorber 10, the first tube 11 and the cylindrical member 20 are fixed to each other. The second tube 12 and an integrated combination of the first piston part 41, the second piston part 42, the first rod part 31, and the second rod part 32, are fixed to each other. The second tube 12 and the integrated combination of the first piston part 41, the second piston part 42, the first rod part 31, and the second rod part 32 are movable relative to the first tube 11 and the cylindrical member 20.

The stiffness of the second rod part 32 is lower than the stiffness of the first rod part 31. The stiffness of a rod (the first rod part 31 or the second rod part 32) is expressed by a force that is required to cause the rod to deform (to be bent). More specifically, the stiffness is expressed as follows: the stiffness = load / the amount of deformation. Assuming a situation where one end of each of the first rod part 31 and the second rod part 32 is fixed and a force causing the rod to be bent (a force in a direction perpendicular to the axial direction of the rod) is applied to a point of the same distance from the one end of each of the first rod part 31 and the second rod part 32, the amount of deformation of the second rod part 32 is larger than the amount of deformation of the first rod part 31. In a case where the first rod part 31 and the second rod part 32 have the same shape and are made of different materials, a comparison of the stiffness between the first rod part 31 and the second rod part 32 can be made by comparing the Young's modulus of the materials. The first rod part 31 and the second rod part 32 may be either made of the same material or made of different materials. Since the outer circumferential surface of the second rod part 32 does not slide on the inner circumferential surface of the second cylinder part 22, it may not be necessary to ensure a hardness of an external surface of the second rod part 32. Therefore, it may be acceptable that, for example, the first rod part 31 is a rod-like element made of a metal while the second rod part 32 is a rod-shaped element made of a resin. In the shock absorber 10, the outer diameter of the second rod part 32 is smaller than the outer diameter of the second piston part 42. The outer diameter of the second rod part 32 is smaller than the outer diameter of the first rod part 31. Thereby, the volume of the first chamber 52a is ensured.

The first chamber 51a of the first space 51 is defined by a cap-side surface of the first end portion 21a of the first cylinder part 21, the inner surface of the first cylinder part 21, an external surface of the first rod part 31, and a head-side surface of the first piston part 41.

The second chamber 51b of the first space 51 is defined by the boundary surface 55 between the first space 51 of the first cylinder part 21 and the second space 52 of the second cylinder part 22, a head-side surface of the second end portion 21b, a surface of the first piston part 41 at the second rod part 32 side, the outer circumferential surface of the second rod part 32, and the inner circumferential surface of the first cylinder part 21. The second chamber 51b of the first space 51 is in communication with the first chamber 52a of the second space 52.

The first chamber 52a of the second space 52 is defined by the boundary surface 55 between the first space 51 of the first cylinder part 21 and the second space 52 of the second cylinder part 22, a surface of the second piston part 42 at the second rod part 32 side, the outer circumferential surface of the second rod part 32, and the inner circumferential surface of the second cylinder part 22. Thereby, the volume of the first chamber 52a is ensured.

The second chamber 52b of the second space 52 is defined by a head-side surface of the second end portion 11b of the first tube 11, a cap-side surface of the second piston part 42, and the inner circumferential surface of the second cylinder part 22.

A check valve 15 is provided in the cylindrical member 20. The check valve 15 permits a stream of the working fluid from the outside of the cylindrical member 20 (the fourth space 54) to the inside of the cylindrical member 20 (the second chamber 51b of the first space 51 and the first chamber 52a of the second space 52) to flow in only one direction. The check valve 15 is provided at the second end portion 21b of the first cylinder part 21. A stream of the working fluid flowing from the outside of the cylindrical member 20 into the inside of the cylindrical member 20 via the check valve 15 is a substantially free flow, and gives substantially no contribution to generation of a damping force. The check valve 15 does not allow the working fluid to flow from the inside to the outside of the cylindrical member 20.

The first piston part 41 includes an orifice 16 to limit a flow of the working fluid between the first chamber 51a and the second chamber 51b. When the working fluid passes through the orifice 16, a pressure loss occurs, so that a damping force is generated.

A communication passage 18 is formed in the first end portion 12a of the second tube 12 and in the first rod part 31. The communication passage 18 allows communication between the outside of the cylindrical member 20 (the fourth space 54) and the inside of the cylindrical member 20 (the first chamber 51a of the first space 51). The communication passage 18 includes a fluid passage 18a and a fluid passage 18b. The fluid passage 18a is formed in the first end portion 12a of the second tube 12. The fluid passage 18b is formed in the first rod part 31. A flow control valve 17 (variable orifice) is provided in the communication passage 18 (the fluid passage 18a). The flow control valve 17 enables adjustment of the flow rate of a working fluid flowing through the communication passage 18.

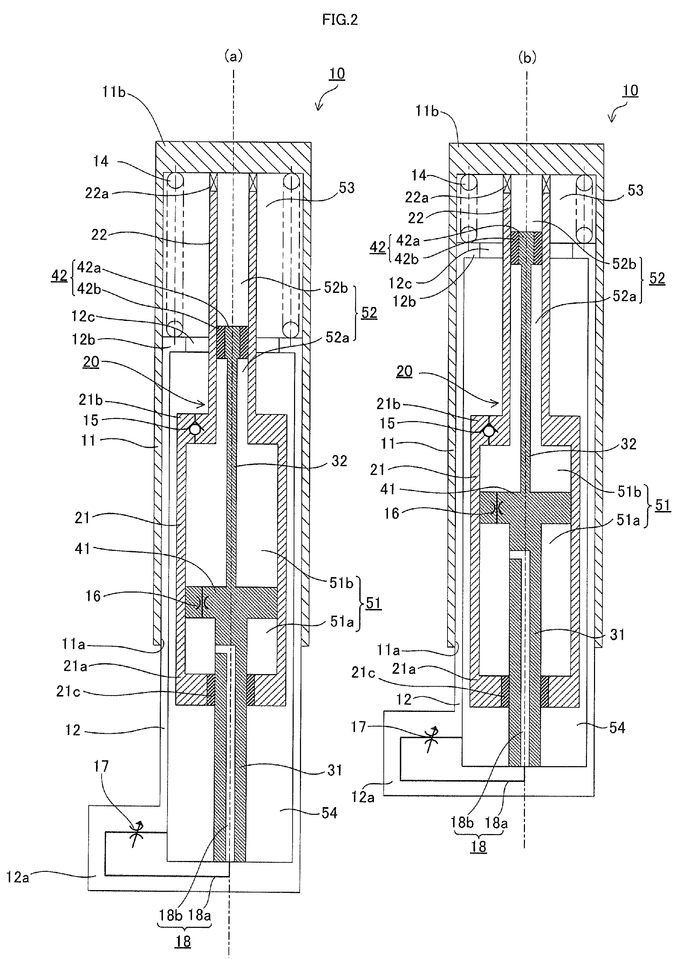

Next, the shock absorber 10 during expansion or contraction will be described with reference to the drawings. FIG. 2(a) is a cross-sectional view schematically showing a state when the shock absorber shown in FIG. 1 is expanded.

In an expansion stroke, the second tube 12 moves toward the head side (the lower side in FIG. 2). The first rod part 31, the first piston part 41, the second rod part 32, and the second piston part 42 accordingly move toward the head side. As a result, the volume of the first chamber 51 a of the first space 51 decreases. On the other hand, the volume of the second chamber 51 b of the first space 51 increases. The volume of the first chamber 52a of the second space 52 decreases.

The amount of movement of the first piston part 41 and the second piston part 42 toward the head side is defined as $\Delta L$ (mm). The cross-sectional area of the first piston part 41 is defined as P1 ($mm^2$). The cross-sectional area of the second piston part 42 is defined as P2 ($mm^2$). The cross-sectional area of the first rod part 31 is defined as R1 ($mm^2$). The cross-sectional area of the second rod part 32 is defined as R2 ($mm^2$). Since the outer diameter of the first piston part 41 is larger than the outer diameter of the first rod part 31, a relationship of P1>R1 is established. Since the outer diameter of the second piston part 42 is larger than the outer diameter of the second rod part 32, a relationship of P2>R2 is established. Since the outer diameter of the second piston part 42 is smaller than the outer diameter of the first piston part 41, a relationship of P2<P1 is established. Since the outer diameter of the second rod part 32 is smaller than the outer diameter of the first rod part 31, a relationship of R2<R1 is established.

In the shock absorber 10, the following relationships are established.

$$\text{The amount } (mm^3) \text{ of volume decrease in the first chamber 51a of the first}$$
$$\text{space } 51 = \Delta L(P1-R1) \quad \ldots \text{(i)}$$

The amount (mm$^3$) of volume increase in the second chamber 51b of the first

space 51 = $\Delta L(P1-R2)$     ... (ii)

The cross-sectional area of the second rod part 32 is smaller than the cross-sectional area of the first rod part 31, as described above. Thus, in total, the volume of the first space 51 increases.

The amount (mm$^3$) of volume increase in the first space 51 = $\Delta L(R1-R2)$

... (iii)

In the shock absorber 10, the volume of the first chamber 52a of the second space 52 that is in communication with the first space 51 decreases.

The amount (mm$^3$) of volume decrease in the first chamber 52a of the second

space 52 = $\Delta L(P2-R2)$     ... (iv)

In this manner, the volume increase (iii) in the first space 51, which occurs in the expansion stroke, is compensated for by the volume decrease (iv) in the first chamber 52a. This reduces the amount of the working fluid flowing between the inside and the outside of the cylindrical member 20. Therefore, the responsiveness in generating the damping force is ensured.

Accordingly, in the whole of the first space 51 and the first chamber 52a of the second space 52 that is in communication with the first space 51, the following relationship is established.

The amount (mm$^3$) of volume decrease in the first space 51 and the first

chamber 52a = $\Delta L(P2-R1)$        ... (v)

When the value of R1 is larger than the value of P2, the value of $\Delta L(P2-R1)$ is a negative value. In such a case, the value of $\Delta L(P2-R1)$ represents the amount of volume increase in the first space 51 and the first chamber 52a.

Thus, in the shock absorber 10, not only the volume increase (iii) in the first space 51 but also the volume decrease (iv) in the first chamber 52 a of the second space 52 that is in communication with the first space 51 occurs in the expansion stroke.

In the expansion stroke, an amount of working fluid corresponding to the value of $\Delta L(P1-R1)$ is discharged from the first chamber 51 a. An amount of working fluid corresponding to the value of $\Delta L(P1-P2)$ flows from the first chamber 51 a through the orifice 16 into the second chamber 51b. An amount of working fluid corresponding to the value of $\Delta L(P2-R1)$ flows from the first chamber 51a through the flow control valve 17 to the outside of the cylindrical member 20 (the fourth space 54).

FIG. 2(b) is a cross-sectional view schematically showing a state when the shock absorber shown in FIG. 1 is contracted.

In a contraction stroke, the second tube 12 moves toward the cap side (the upper side in FIG. 2). The first rod part 31, the first piston part 41, the second rod part 32, and the second piston part 42 accordingly move toward the cap side. As a result, the volume of the first chamber 51 a of the first space 51 increases. On the other hand, the volume of the second chamber 51b of the first space 51 decreases. The volume of the first chamber 52a of the second space 52 increases.

The amount of movement of the first piston part 41 and the second piston part 42 toward the cap side is defined as $\Delta L$ (mm).

In the shock absorber 10, the following relationships are established.

The amount (mm$^3$) of volume increase in the first chamber 51a of the first space $51 = \Delta L(P1{-}R1)$ ... (i)

The amount (mm$^3$) of volume decrease in the second chamber 51b of the first space $51 = \Delta L(P1{-}R2)$ ... (ii)

In total, the volume of the first space 51 decreases.

The amount (mm$^3$) of volume decrease in the first space $51 = \Delta L(R1{-}R2)$ ... (iii)

In the shock absorber 10, the volume of the first chamber 52a of the second space 52 that is in communication with the first space 51 increases.

The amount (mm$^3$) of volume increase in the first chamber 52a of the second space $52 = \Delta L(P2{-}R2)$ ... (iv)

Thus, the amount of the working fluid flowing between the inside and the outside of the cylindrical member 20 is reduced. Therefore, the responsiveness in generating the damping force is ensured.

Accordingly, in the whole of the first space 51 and the first chamber 52a of the second space 52 that is in communication with the first space 51, the following relationship is established.

The amount (mm$^3$) of volume increase in the first space 51 and the first chamber $52a = \Delta L(P2{-}R1)$ ... (v)

When the value of R1 is larger than the value of P2, the value of $\Delta L(P2{-}R1)$ is a negative value. In such a case, the value of $\Delta L(P2{-}R1)$ represents the amount of volume decrease in the first space 51 and the first chamber 52a.

Thus, in the shock absorber 10, not only the volume decrease (iii) in the first space 51 but also the volume increase (iv) in the first chamber 52a of the second space 52 that is in communication with the first space 51 occurs in the contraction stroke.

In the contraction stroke, an amount of working fluid corresponding to the value of $\Delta L(P1{-}P2)$ flows from the second chamber 51b through the orifice 16 into the first chamber 51a. An amount of working fluid corresponding to the value of $\Delta L(P2{-}R1)$ flows from the outside of the cylindrical member 20 (the fourth space 54) through the flow control valve 17 into the first chamber 51 a. As a result, an amount of working fluid corresponding to the value of $\Delta L(P1{-}R1)$ flows into the first chamber 51a.

<Second Embodiment>

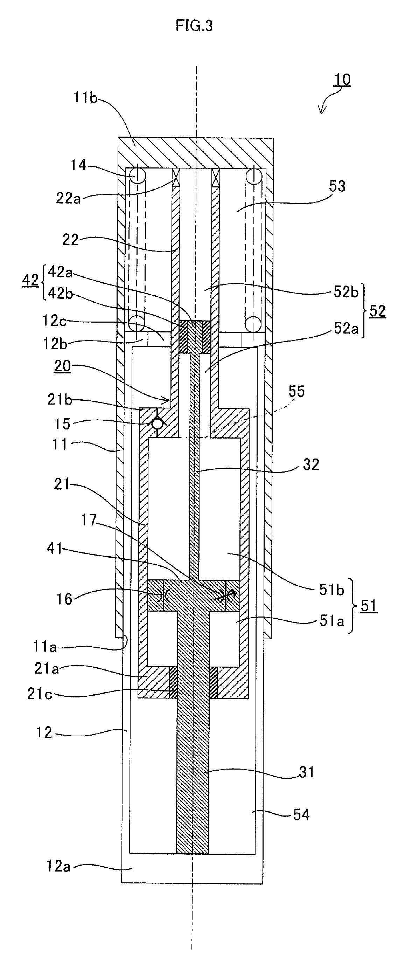

FIG. 3 is a cross-sectional view of a shock absorber according to a second embodiment.

In the following, differences from the first embodiment will be described.

In the shock absorber 10 of the second embodiment, the flow control valve 17 is arranged within the cylindrical member 20. The flow control valve 17 is provided in the first piston part 41. The flow control valve 17 is a valve that adjusts the flow rate of the working fluid flowing between the first chamber 51 a and the second chamber 51 b of the first space 51. Since the flow control valve 17 is not arranged in the first end portion 12a of the second tube 12, the communication passage 18 is not provided, either. In the shock absorber 10 of the second embodiment, the outer diameter of the first rod part 31 is substantially equal to the outer diameter of the second piston part 42. Therefore, a relationship of R1=P2 is established.

Next, the shock absorber 10 during expansion or contraction will be described with reference to the drawings.

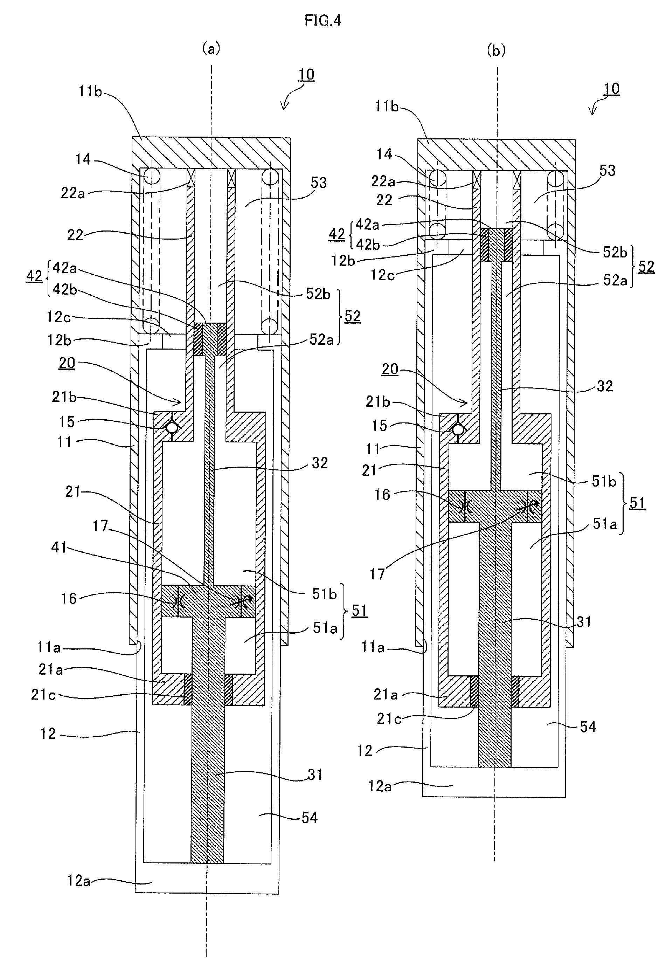

FIG. 4(a) is a cross-sectional view schematically showing a state when the shock absorber shown in FIG. 3 is expanded.

In the shock absorber 10 of the second embodiment, the following relationships are established.

$$\text{The amount (mm}^3\text{) of volume decrease in the first chamber 51a of the first space } 51 = \Delta L(P1\text{--}R1) \quad \dots \text{(i)}$$

$$\text{The amount (mm}^3\text{) of volume increase in the second chamber 51b of the first space } 51 = \Delta L(P1\text{--}R2) \quad \dots \text{(ii)}$$

The cross-sectional area of the second rod part 32 is smaller than the cross-sectional area of the first rod part 31. Thus, in total, the volume of the first space 51 increases.

$$\text{The amount (mm}^3\text{) of volume increase in the first space } 51 = \Delta L(R1\text{--}R2) \quad \dots \text{(iii)}$$

In the shock absorber 10, the volume of the first chamber 52a of the second space 52 that is in communication with the first space 51 decreases.

$$\text{The amount (mm}^3\text{) of volume decrease in the first chamber 52a of the second space } 52 = \Delta L(P2\text{--}R2) \quad \dots \text{(iv)}$$

Accordingly, in the whole of the first space 51 and the first chamber 52a of the second space 52 that is in communication with the first space 51, the following relationship is established.

$$\text{The amount (mm}^3\text{) of volume decrease in the first space } 51 \text{ and the first chamber 52a} = \Delta L(P2\text{--}R1) \quad \dots \text{(v)}$$

Since a relationship of R1=P2 is established in the shock absorber 10 of the second embodiment, the amount of volume decrease in the first space 51 and the first chamber 52a is substantially zero. In this manner, the shock absorber 10 of the second embodiment is configured such that the volume increase (iii) in the first space 51, which occurs in the expansion stroke, is compensated for by the volume decrease (iv) in the first chamber 52a, so that the amount of volume decrease in the first space 51 and the first chamber 52a is substantially zero. The amount of the working fluid flowing between the inside and the outside of the cylindrical member 20 is substantially zero. This ensures good responsiveness in generating the damping force.

In the expansion stroke, an amount of working fluid corresponding to the value of ΔL(P1-R1) flows from the first chamber 51a through the orifice 16 and the flow control valve 17 into the second chamber 51b. Substantially no inflow or outflow of the working fluid into or out of the cylindrical member 20 occurs.

FIG. 4(b) is a cross-sectional view schematically showing a state when the shock absorber shown in FIG. 3 is contracted.

In the shock absorber 10, the following relationships are established.

$$\text{The amount (mm}^3\text{) of volume increase in the first chamber 51a of the first space } 51 = \Delta L(P1\text{--}R1) \quad \dots \text{(i)}$$

The amount ($mm^3$) of volume decrease in the second chamber 51b of the first

space 51 = $\Delta L(P1-R2)$    ... (ii)

In total, the volume of the first space 51 decreases.

The amount ($mm^3$) of volume decrease in the first space 51 = $\Delta L(R1-R2)$

... (iii)

In the shock absorber 10, the volume of the first chamber 52a of the second space 52 that is in communication with the first space 51 increases.

The amount ($mm^3$) of volume increase in the first chamber 52a of the second

space 52 = $\Delta L(P2-R2)$    ... (iv)

Accordingly, in the whole of the first space 51 and the first chamber 52a of the second space 52 that is in communication with the first space 51, the following relationship is established.

The amount ($mm^3$) of volume increase in the first space 51 and the first

chamber 52a = $\Delta L(P2-R1)$        ... (v)

Since a relationship of R1=P2 is established in the shock absorber 10 of the second embodiment, the amount of volume increase in the first space 51 and the first chamber 52a is substantially zero. In this manner, the volume decrease (iii) in the first space 51, which occurs in the contraction stroke, is compensated for by the volume increase (iv) in the first chamber 52a, so that the amount of volume increase in the first space 51 and the first chamber 52a is substantially zero. The amount of the working fluid flowing between the inside and the outside of the cylindrical member 20 is substantially zero. This ensures a good responsiveness in generating the damping force.

In the expansion stroke, an amount of working fluid corresponding to the value of $\Delta L(P1-R1)$ flows from the second chamber 51b through the orifice 16 and the flow control valve 17 into the first chamber 51a. Substantially no inflow or outflow of the working fluid into or out of the cylindrical member 20 occurs.

The relationship between displacement (the amount of expansion or contraction) and a load of the shock absorber 10 in the first and second embodiments will be described with reference to the drawings.

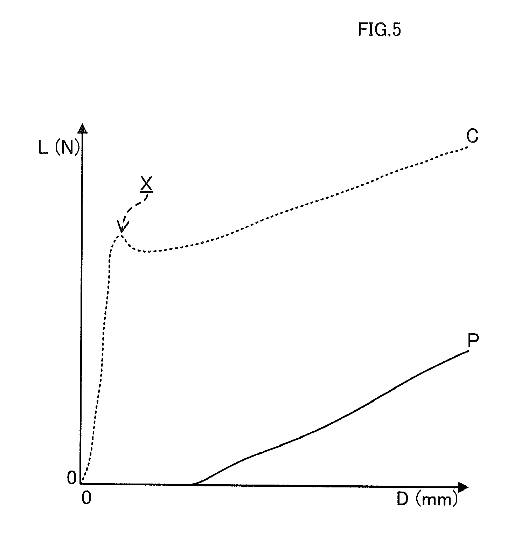

FIG. 5 is a diagram showing the relationship between a displacement D and a load L of the shock absorber.

In FIG. 5, a curve C indicates the relationship between the displacement D and the load L in the conventional shock absorber as disclosed in the Patent Document 1. A curve P indicates the relationship between the displacement D and the load L in the shock absorber 10 of the first and second embodiments.

In the shock absorber 10 of the first and second embodiments, the stiffness of the second rod part 32 is lower than the stiffness of the first rod part 31, which causes a reduced frictional force during expansion or contraction. Therefore, as shown in FIG. 5, the load necessary for displacement (expansion or contraction) of the shock absorber 10 is smaller in P than in C. In the conventional shock absorber, a load change occurring at a time of switching between the expansion stroke and the contraction stroke is large. This may cause a uneven or rough sense of switching to the rider (X in FIG. 5). In this respect, the shock absorber 10 of the first and second embodiments is configured such that the stiffness of the second rod part 32 is lower than the stiffness of the first rod part 31, and therefore such a part X having a large load change does not occur in P.

Next, a front fork including the above-described shock absorber and a saddle-ride type vehicle including the above-described shock absorber will be described.

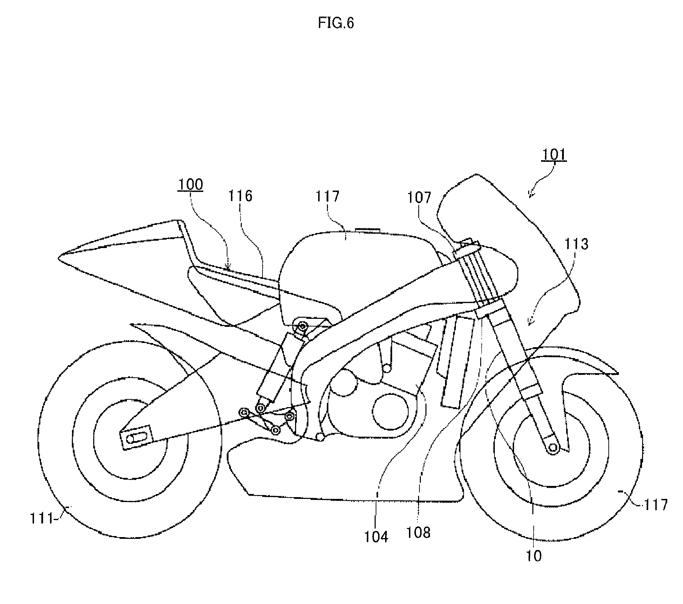

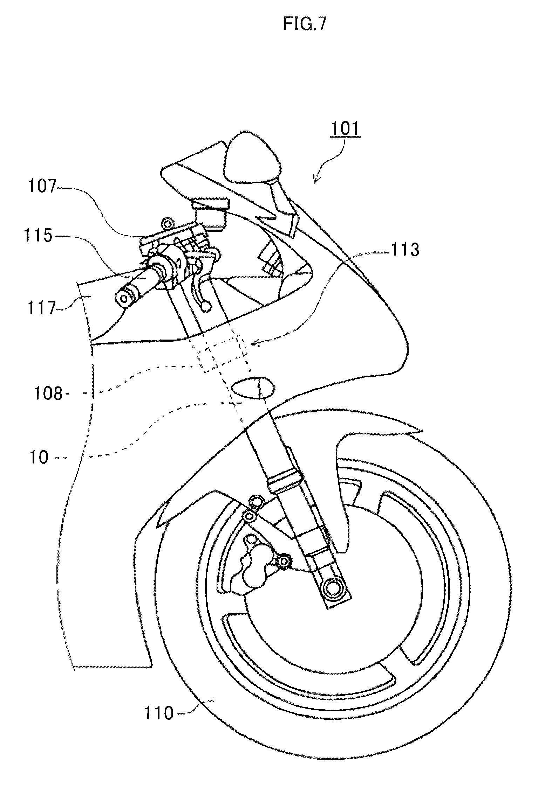

FIG. 6 is a side view schematically showing a motorcycle including a front fork including the shock absorber shown in FIG. 3. FIG. 7 is a side view schematically showing, on an enlarged scale, a part of the motorcycle shown in FIG. 6.

The motorcycle 101 includes a main body 100, a handlebar 115 (not shown in FIG. 6, see FIG. 7), a front wheel 110, and a rear wheel 111 serving as a drive wheel. The main body 100 includes a fuel tank 117, a seat 116, and an engine 104.

As shown in FIGS. 6 and 7, a front fork 113 is mounted in the motorcycle 101. The front fork 113 mounted in the motorcycle 101 extends obliquely relative to the vertical direction.

As shown in FIGS. 6 and 7, the front fork 113 includes a pair of right and left shock absorbers 10. This shock absorber 10 is the shock absorber 10 according to the second embodiment. Instead of the shock absorber 10 according to the second embodiment, the shock absorber 10 according to the first embodiment may be adopted as the shock absorber 10 included in the front fork 113.

The front fork 113 includes an upper bracket 107 and an under bracket 108 that couple the pair of right and left shock absorbers 10 to each other. When the front wheel 110 receives a shock from a road surface (not shown), the pair of right and left shock absorbers 10 expand or contract in accordance with the shock.

The above-described motorcycle 101 is one example of saddle-ride type vehicles. An object in which the shock absorber 10 is installed is not limited to the above-described examples. The shock absorber 10 can be suitable for use as a front fork of a vehicle. Particularly, the shock absorber 10 can be more suitable for use as a front fork of a saddle-ride type vehicle. No particular limitation is put on the saddle-ride type vehicle. Examples of the saddle-ride type vehicle include a motorcycle, a three-wheeled motor vehicle, and a vehicle for off-road use (all-terrain vehicle). Examples of the motorcycle include a scooter, a moped, and a sport type motorcycle.

In the above-described example, the cap side of the shock absorber 10 is located above and the head side thereof is located below. It may be also possible that the cap side is located below and the head side is located above. That is, the shock absorber 10 may be inverted. In the above-described example, the first tube serves as the outer tube and the second tube serves as the inner tube. The shock absorber 10 is not limited to this example. A manner in which the valves (the check valve 15, the orifice 16, and the flow control valve 17) are arranged in the shock absorber 10 of the first and second embodiments is merely one example of the present invention. The present invention is not limited to this example.

It is desirable that the shock absorber 10 is configured such that the outer diameter of the first rod part 31 is substantially equal to the outer diameter of the second piston part 42, for the following reason. That is, since substantially no inflow or outflow of the working fluid into or out of the cylindrical member 20 occurs during expansion or contraction, the responsiveness in generating the damping force is efficiently ensured. However, the present invention is not limited to this example.

No particular limitation is put on the structure of the first rod part 31, the second rod part 32, the first piston part 41, and the second piston part 42. In one possible example, the first rod part 31, the second rod part 32, the first piston part 41, and the second piston part 42 may have a structure such that a single rod-shaped element serving as the first rod part 31 and the second rod part 32 are inserted through the first piston part 41 and the second piston part 42 having annular shapes. Alternatively, the first rod part 31, the second rod part 32, the first piston part 41, and the second piston part 42 may have a structure such that the first rod part 31 and the second rod part 32 that are separate rod-shaped elements are attached to the first piston part 41 and the second piston part 42 that are plate members.

While some preferred embodiments of the present invention have been thus far described, it is obvious that various changes and modifications can be made within the scope and the spirit of the present invention. The scope of the present invention is limited only by the accompanied claims.

[DESCRIPTION OF THE REFERENCE SIGNS]

| | |
|---|---|
| 10 | shock absorber |
| 11 | first tube |
| 11a | open end portion |
| 11b | closed end portion |
| 12 | second tube |
| 12a | first end portion |
| 12b | second end portion |
| 12c | through hole |
| 14 | biasing element (spring) |
| 15 | check valve |
| 16 | orifice |
| 17 | flow control valve |
| 18 | communication passage |
| 18a | fluid passage |
| 18b | fluid passage |
| 20 | cylindrical member |

| | |
|---|---|
| 21 | first cylinder part |
| 21a | first end portion |
| 21b | second end portion |
| 21c | sealing member |
| 22 | second cylinder part |
| 22a | communication hole |
| 31 | first rod part |
| 32 | second rod part |
| 41 | first piston part |
| 42 | second piston part |
| 42a | solid portion |
| 42b | sealing member |
| 51 | first space |
| 51a | first chamber |
| 51b | second chamber |
| 52 | second space |
| 52a | first chamber |
| 52b | second chamber |
| 53 | third space |
| 54 | fourth space |

**Claims**

1. A shock absorber (10) comprising:

   a first cylinder part (21);
   a second cylinder part (22) provided at one end portion of the first cylinder part (21), the second cylinder part (22) extending in an axial direction of the first cylinder part (21) from the one end portion of the first cylinder part (21), the second cylinder part (22) being in communication with the first cylinder part (21);
   a first piston part (41) arranged in an internal space of the first cylinder part (21), the first piston part (41) being movable in the axial direction of the first cylinder part (21), the first piston part (41) partitioning the internal space of the first cylinder part (21) into two chambers (51a, 51b);
   a second piston part (42) arranged in an internal space of the second cylinder part (22), the second piston part (42) being movable in an axial direction of the second cylinder part (22), the second piston part (42) partitioning the internal space of the second cylinder part (22) into two chambers (52a, 52b), the two chambers including a first chamber (52a) and a second chamber (52b), the first chamber (52a) being in communication with the first cylinder part (21), the second chamber (52b) not being in communication with the first cylinder part (21);
   a first rod part (31) connected to the first piston part (41), the first rod part (31) extending in the axial direction of the first cylinder part (21) from the first piston part (41) through the other end portion of the first cylinder part (21) to the outside of the first cylinder part (21); and
   a second rod part (32) provided between the first piston part (41) and the second piston part (42), the second rod part (32) extending in the axial direction of the second cylinder part (22) from the first piston part (41) through the one end portion of the first cylinder part (21) to the inside of the second cylinder part (22), the second rod part (32) being connected to the second piston part (42),
   the second rod part (32) having a stiffness lower than the stiffness of the first rod part (31),
   the shock absorber (10) being configured such that, when the first piston part (41) moves toward the one end portion side of the first cylinder part (21), the first rod part (31) moves into the first cylinder part (21), so that a volume of the internal space of the first cylinder part (21) decreases, while the second piston part (42) moves along with the first piston part (41), so that a volume of the first chamber (52a) of the second cylinder part (22) increases.

2. The shock absorber (10) according to claim 1, wherein
   the second piston part (42) is slidable on an inner surface of the second cylinder part (22),
   the second rod part (32) is not slidable on the inner surface of the second cylinder part (22).

3. The shock absorber (10) according to claim 1 or 2, wherein
   the second rod part (32) has an outer diameter smaller than an outer diameter of the second piston part (42).

**4.** The shock absorber (10) according to any one of claims 1 to 3, wherein
the second rod part (32) has an outer diameter smaller than an outer diameter of the first rod part (31).

**5.** The shock absorber (10) according to any one of claims 1 to 4, wherein
the first chamber (52a) of the second cylinder part (22) is defined by a boundary surface (55) between the internal space of the first cylinder part (21) and the internal space of the second cylinder part (22), a surface of the second piston part (42) facing the second rod part (32) side, an outer circumferential surface of the second rod part (32), and an inner circumferential surface of the second cylinder part (22).

**6.** A front fork (113) comprising the shock absorber (10) according to any one of claims 1 to 5.

**7.** A saddle-ride type vehicle comprising the front fork (113) according to claim 6.

FIG.1

FIG.2

FIG.3

FIG.4

(a)                                                    (b)

FIG.5

FIG.6

FIG.7

**EP 2 749 787 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004293660 A